(19) Europäisches Patentamt
European Patent Office
Office européen des brevets

(11) **EP 3 024 115 A1**

(12) **EUROPEAN PATENT APPLICATION**
published in accordance with Art. 153(4) EPC

(43) Date of publication:
**25.05.2016 Bulletin 2016/21**

(51) Int Cl.:
***H02J 7/10*** *(2006.01)*

(21) Application number: **14826587.9**

(86) International application number:
**PCT/JP2014/068805**

(22) Date of filing: **15.07.2014**

(87) International publication number:
**WO 2015/008757 (22.01.2015 Gazette 2015/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.07.2013   JP 2013148056**

(71) Applicant: **NEC Corporation
Tokyo 108-8001 (JP)**

(72) Inventors:
• **SHIZUNO, Takayuki
Tokyo 108-8001 (JP)**
• **OHTA, Yuko
Tokyo 108-8001 (JP)**

(74) Representative: **Vossius & Partner
Patentanwälte Rechtsanwälte mbB
Siebertstrasse 3
81675 München (DE)**

(54) **RAPID CHARGING METHOD FOR STORAGE CELL, RAPID CHARGING SYSTEM, AND PROGRAM**

(57)    The present rapid charging method for electric vehicles includes the steps of A1: measuring charging power for an electric vehicle that is being charged, A2: determining whether the measured charging power decreases monotonically for a certain period of time, A3: determining whether a difference between a maximum value of the measured charging power and a value of the current charging power is equal to or higher than a certain value, A4: calculating a state of charge of the electric vehicle and determining whether a current state of charge is equal to or less than a predetermined value, and A5: stopping temporarily and restarting a charging if (a) the charging power does not decrease monotonically for the certain period of time, (b) the difference between the maximum value of the charging power and the current value of the charging power is equal to or higher than the certain value, and (c) the current state of charge is equal to or less than the predetermined value.

Fig. 4

EP 3 024 115 A1

**Description**

TECHNICAL FIELD

The present invention relates to a rapid charging method for storage batteries, a rapid charging system, and a program using a charger, and particularly, to a rapid charging method for storage batteries, a rapid charging system, and a program that are capable of performing rapid charging preferably even when a charge curve indicating the relation between power and time during charging is unusual.

BACKGROUND ART

Various systems have been proposed recently for achieving a business model to receive payments in return for charge service provided by chargers installed for charging electric vehicles or the like. Time required for charging of an electric vehicle depends on the specifications of the secondary battery of the electric vehicle and the performance of a charger, as a matter of course. However, such time is generally about several tens of minutes in quick charge and about several hours in normal charge.

For example, Patent Document 1 discloses a system that includes a plurality of chargers for charging electric vehicles, a server connected with the chargers, and the like, in which available resources in the system are grasped, and power distribution to the respective chargers is then determined to operate the chargers.

CITATION LIST

PATENT DOCUMENT

Patent Document 1: WO2012/118184

SUMMARY OF INVENTION

TECHNICAL PROBLEM

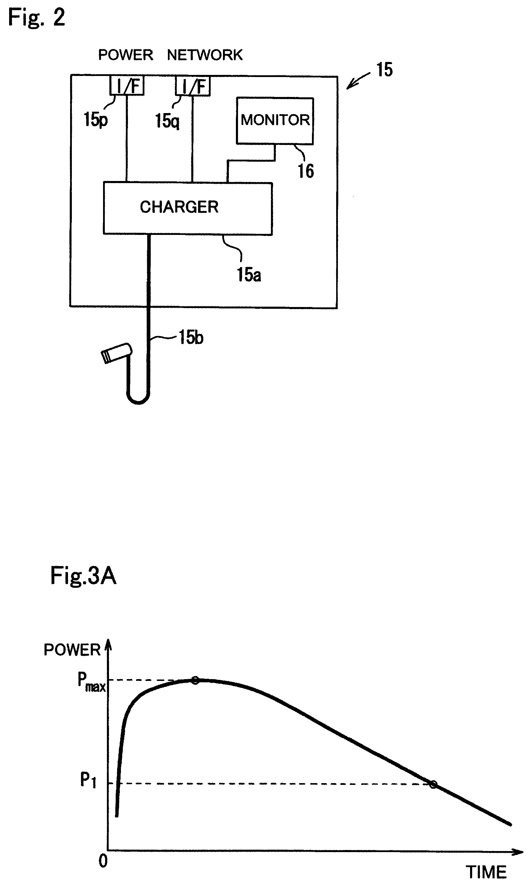

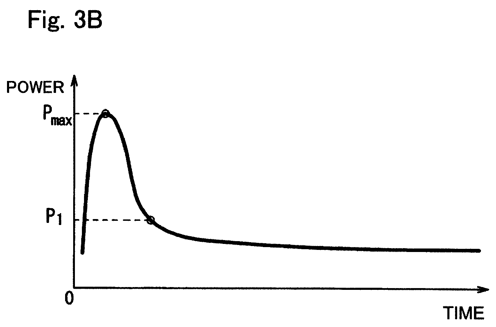

As described later with reference to Figures 3A and 3B, in charging an electric vehicle, an exceptional charge curve as shown in Figure 3B other than a normal charge curve as shown in Figure 3A can be obtained in some cases. In the charge curve in Figure 3B, the charging power abruptly decreases at a relatively earlier time after the charging is started, and thereafter, low-power charging continues for a long time. In the case of such a charge curve, a charging time may be prolonged.

The above problem is not specific to electric vehicles and may occur when other storage batteries than a storage batteries of an electric vehicle is charged.

Therefore, an object of the present invention is to provide a rapid charging method for storage batteries, a rapid charging system, and a program that are capable of performing rapid charging for storage batteries preferably even in a case of such an unusual charge curve.

SOLUTION TO PROBLEM

A rapid charging method for storage batteries according to an embodiment of the present invention for achieving the above objet is as follows.

A rapid charging method for storage batteries using a charger, the method comprising the steps of

A1: measuring charging power of a storage battery that is being charged;
A2: determining whether the measured charging power decreases monotonically for a certain period of time;
A3: determining whether a difference between a maximum value of the measured charging power and a value of current charging power is equal to or higher than a certain value;
A4: calculating a state of charge (SOC) of the storage battery and determining whether a current state of charge is equal to or less than a predetermined value; and
A5: stopping temporarily and restarting a charging, if (a) the charging power does not decrease monotonically for the certain period of time, (b) the difference between the maximum value of the charging power and the value of current charging power is equal to or higher than the certain value, and (c) the current state of charge is equal to or less than the predetermined value.

(Definitions of terms)

The term "storage battery" refers to, for example, a storage battery (a secondary battery) of an electric vehicle. However, the term "storage battery" is not limited thereto and may refer to a storage battery for other use.

The term "charging-control device" refers to a computer capable of performing a charging-state management method according to an embodiment of the present invention. Examples of the charging-control device include a server. The charging-control device may include a single computer or a plurality of computers.

The term "charge curve" refers to a graph showing the relation between charging time and charging power when a storage battery of an electric vehicle is charged, for example. The charge curve is an index of the charge characteristics of the storage battery.

ADVANTAGEOUS EFFECT OF INVENTION

The present invention can provide a rapid charging method for storage batteries and the like that are capable of performing rapid charging preferably even when a charge curve indicating the relation between power and time during charging is unusual.

BRIEF DESCRIPTION OF DRAWINGS

Figure 1 is a diagram schematically illustrating a power storing and charging system of an embodiment of the present invention.
Figure 2 is a block diagram illustrating a schematic configuration of a charger.
Figure 3A shows a normal charge curve.
Figure 3B shows an exceptional charge curve.
Figure 4 is a flowchart showing an example of a rapid charging operation.

DESCRIPTION OF EMBODIMENT

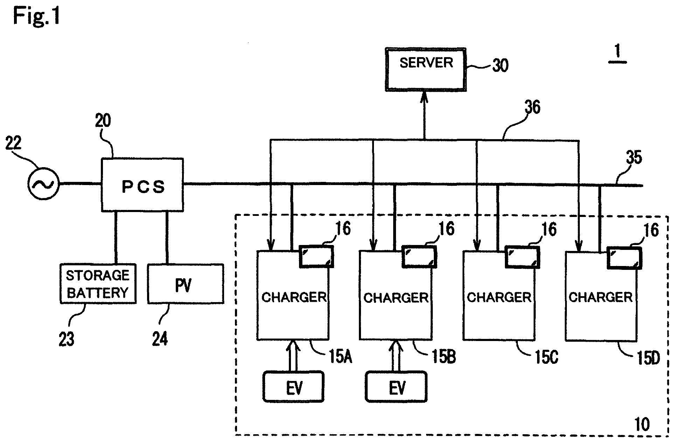

An embodiment of the present invention will be described with reference to the drawings. Configurations, functions, operations, and the like in the following descriptions are those according to an embodiment of the present invention. The present invention is not limited to them. Figure 1 is a diagram schematically illustrating a power storing and charging system according to an embodiment of the present invention.

A power storing and charging system 1 has a configuration including a storage battery 23 and a photovoltaic power generating device 24. The power storing and charging system 1 includes a PCS (Power Conditioner System) 20 that receives power from a system power 22 and the like and supplies the power to predetermined devices in the system, a charging facility 10 that has a plurality of chargers 15A to 15D for charging electric vehicles (EV), and a charge controlling server 30 that controls the operations of the chargers 15A to 15D. A plurality of loads such as stores and houses, illustrations of which are omitted, may be connected to a distribution network 35.

The charging facility 10 is not limited to a particular facility but may be a charging station or the like in a shopping facility, a rest area, or the like, for example. The number of the chargers 15A to 15D arranged in the charging facility 10 is not limited to four. Three or less, or five or more of chargers may be arranged. The configuration of the chargers 15A to 15D will be described later with reference to another drawing.

The PCS (Power Conditioner System) 20 is also referred to as a power conditioner, a power controller, or the like. The PCS 20 has a function for converting AC power to DC power and a function for supplying power from a system power or the like to the chargers 15A to 15D and loads (not illustrated) such as stores and houses. One PCS 20 is illustrated in Figure 1, but two or more PCSs may be arranged.

The PCS 20 may be configured to perform bidirectional communication with the outside via a predetermined network (not illustrated).

Power supplying means to be connected to the PCS 20 is not limited to particular means and may be the system power 22, one or more storage batteries 23, the photovoltaic power generating device 24, a wind power generating device, or the like. As a matter of course, one or a combination of two or more of them may be used.

In the present embodiment, as an example, the four chargers 15A to 15D are disposed in the charging facility 10. The chargers 15A to 15D may be products identical with one another, or may be a combination of different products. In the following descriptions, the chargers 15A to 15D are identical products and the chargers 15A to 15D are referred to as "charger 15" simply in some cases. The charger 15, which is a quick charger in an example, supplies power to an electric vehicle to charge the secondary battery of the electric vehicle.

As illustrated schematically in the block diagram of Figure 2, for example, the charger 15 may include a control unit 15a that controls the operation or the like of the charger, a feeding cable 15b to be connected to a connector for charging of an electric vehicle, a monitor 16 (a displaying device) that displays predetermined information for users, and the like. The feeding cable 15b may include a communication line (not illustrated). Predetermined information communication with an ECU (Electric Control Unit) of an electric vehicle may be performed via the communication line.

The charger 15 includes an interface unit 15p for power, an interface 15q for communication, and the like. The charger 15 may have any outer shape. For example, in the charger 15, the control unit 15a and the like may be included in a vertical case and the monitor 16 may be disposed in a part of the case.

The monitor 16 may be a normal display, a touch panel display, or the like.

The control unit 15a may be a computer that includes a CPU, a memory, and a storage device (for example, a hard disk). The control unit 15a may perform a part or all of the following operations:

performing charging by a constant-current and constant-voltage control method;
causing the monitor 16 to display a charging status (for example, a state of charge);
performing predetermined data communication with an electric vehicle connected;
performing predetermined data communication with the charge controlling server 30 connected;
performing a predetermined operation in accordance with various instructions from the charge controlling server 30;
measuring charging power of the electric vehicle that is being charged or acquiring such information from the electric vehicle;
calculating the state of charge (SOC) of the secondary battery of the electric vehicle or gathering such information from the electric vehicle; and the like.

Information may be transmitted to the outside at a predetermined timing that is set in advance or at an arbitrary timing in response to a request for transmission from the outside.

For example, power supplied from the charger 15 to an electric vehicle may be selected from among 10 kW, 20 kW, 30 kW, 40 kW, and 50 kW, which are set in stages. Alternatively, the power may be set to an arbitrary value.

Examples of an electric vehicle include a plug-in hybrid vehicle in addition to a battery electric vehicle. A secondary battery of an electric vehicle is not limited to a particular battery but a lithium-ion secondary battery and the like can be preferably used as a secondary battery of an electric vehicle.

The charge controlling server 30, which is a computer including a CPU, a memory, a storage device (for example, a hard disk), an input/output interface, and the like, performs a predetermined operation in accordance with a computer program installed on the computer. The program may be stored in the server 30 via a network, or may be stored in the server 30 by reading a program stored in a storage medium.

The charge controlling server 30 may have a part or all of the following functions that are implemented by a computer program:

(1) a power monitoring unit that gathers information relating to charging power of an electric vehicle that is being charged;
(2) a first determining unit that determines whether the charging power decreases monotonically for a certain period of time;
(3) a second determining unit that determines whether a difference between a maximum value of the charging power and a value of current charging power is equal to or higher than a certain value;
(4) a third determining unit that calculates a state of charge (SOC) of the electric vehicle (or gathering information thereof from the outside) and determines whether a current state of charge is equal to or less than a predetermined value;
(5) a charging restart instructing unit that transmits an instruction to the charger to stop temporarily and restart a charging operation if (a) the charging power does not decrease monotonically for the certain period of time, (b) the difference between the maximum value of the charging power and the current value of the charging power is equal to or higher than the certain value, and (c) the current state of charge is equal to or less than the predetermined value;
(6) a fourth determining unit that determines whether power of the charger is being limited; and the like.

In Figure 1, only one charging power controlling server 30 is illustrated. However, a charging power controlling method according to the present invention may be performed by distributed processing by a plurality of computers. In the above descriptions, the charging power controlling server 30 has the functions of (1) to (6). However, a part of the functions may be provided to the charger 15 and/or the PCS 20.

Next, operations of the power storing and charging system 1 having the above configuration of the present embodiment will be described while particularly focusing on the operations in the charging facility 10. More specifically, the operations of one charger 15A that charges an electric vehicle will be described.

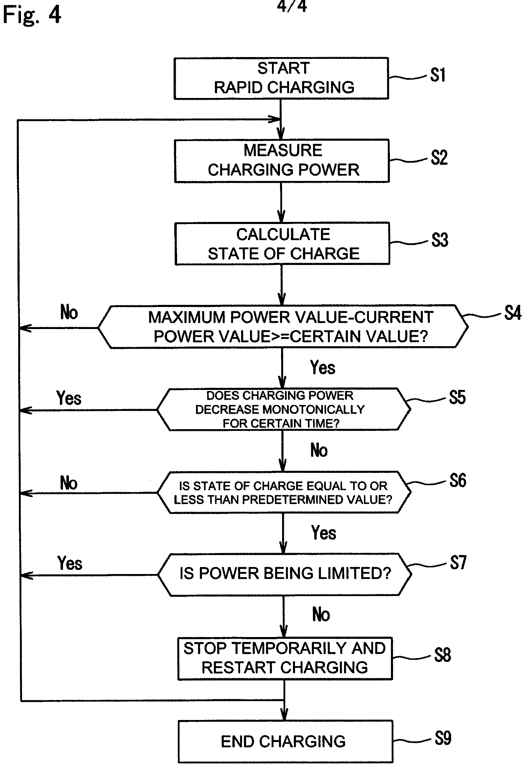

Figure 3A shows an example of a normal charge curve (a relation between power and time) of an electric vehicle. Figure 3B shows an example of an exceptional charge curve. Figure 4 is a flowchart showing an example of a charging operation.

First, the charge curves in Figures 3A and 3B will be described. In CC/CV charging (constant-current and constant-voltage charging) of a lithium-ion secondary battery, larger power is generally required after charging is started and during CC charging basically as shown in Figure 3A. After the charging is shifted to CV charging, a charge curve in which charging power gradually decreases monotonically at a predetermined rate is obtained.

However, in some cases, an exceptional charge curve as shown in Figure 3B may be obtained for example due to characteristics of an electric vehicle or a charging environment (summer or winter) or due to a program for controlling a charging operation. In the charge curve in Figure 3B, at a relatively earlier time after the charging is started (for example, at a time when CC charging that requires large power would be performed in a normal case), the charging power abruptly decreases, and thereafter, low-power charging continues for a long time. In the case of this charge curve, for example, power may be allocated according to the exceptional charge curve, thus a charging time may be prolonged. Therefore, in the present invention, when such an exceptional charge curve is detected, the charging operation of the charger is temporarily stopped and the charging operation is restarted so that a charging operation according to a normal charge curve as shown in Figure 3A can resume.

Next, a rapid charging method of the present embodiment will be described with reference to the flowchart in Figure 4. First, in step S1, the charger 15A starts rapid charging of an electric vehicle. A trigger for the charger 15A to start charging may be a predetermined input (for example, touching a start button or the like on the touch panel monitor 16 or pressing a predetermined physical button or the like on the charger) from a user who uses the charger 15A.

During the charging, the charging power or the like is measured in step S2 and a state of charge (SOC) of a secondary battery is calculated in step S3. The order of step S2 and step S3 is not limited to a particular order. Either step S2 or step S3 may be performed first, or step S2 and step S3 may be performed simultaneously. Detailed descriptions of how to monitor a charging state in these steps are omitted because such a charging state can be measured or calculated by a known method. A parameter to be monitored may be charged voltage, charged current, or the like during the charging. The charging state may be monitor with a function of the charger, a function of the ECU of the electric vehicle, or the combination thereof. For example, information relating to the charging power and the state of charge is transmitted from the charger 15A to the charge controlling server 30.

Next, determination steps of steps S4 to S7 are performed. The order of steps S4 to S7 is also not limited to a particular order. Any of steps S4 to S7 may be performed first or steps S4 to S7 may be performed simultaneously.

In step S4, whether a difference between a maximum value ($P_{max}$, see Figure 3B) of the charging power and a value of current charging power ($P_1$) is equal to or higher than a certain value is determined. Step S4 may be performed by the charge controlling server 30. In a specific example, whether the deference between the maximum value $P_{max}$ and the value of current charging power $P_1$ is equal to or higher than 20 kW, or equal to or higher than 50 kW is determined. Alternatively, whether a ratio of the value of current charging power $P_1$ to the maximum value $P_{max}$ ($P_1/P_{max} \times 100$) is equal to or less than a certain ratio (for example, equal to or less than 60%, 50%, or 40%) may be determined.

In step S5, whether the charging power decreases monotonically for a certain period of time is determined. Similarly to step S4, step S5 may be performed by the charge controlling server 30. The meaning of expression "decreases monotonically for a certain period of time" is that the charging power decreases monotonically at a predetermined rate. Reason why such a determination is performed is to assume that a low-voltage charging state in a charge curve as shown in Figure 3B is continuing when the charging power does not decrease monotonically at the predetermined rate for the certain period of time, which requires restoring a normal charge curve as shown in Figure 3A.

As a matter of course, the term "predetermined rate" does not mean only a particular rate.

The term "predetermined rate" refers to an index for determining whether a current charge curve is a normal curve as shown in Figure 3A or an exceptional curve as shown in Figure 3B. A charge curve of a storage battery depends on the characteristics or the like of the storage battery, charging conditions, or the like. However, when the characteristics or the like of a storage battery to be charged is known in advance, what rate of "the monotonous decrease" is normal (see Figure 3A as an example) and what rate of "the monotonous decrease" is abnormal (see Figure 3B as an example) may be set in advance.

Actual power values during charging vary slightly in some cases. Thus, it can be expected that the term "monotonous decrease" cannot apply to some cases. In such cases, for example, the values may be averaged by using a moving average or the like. Alternatively, when power Pt at a time t is compared with power $P_u$ at a time u (t<u), the following comparing expression including a constant C may be used:

$$\text{Power } P_t > \text{Power } P_u\text{-Constant C}$$

Here, the constant C may be a fixed value or may be a variable value.

In step S6, whether the state of charge is equal to or less than a predetermined value (for example, equal to or less than 50%, 60%, or the like) is determined. Similarly to steps 4 and 5, step S6 may be performed by the charge controlling server 30. A reason why this determination is performed is as follows.

That is, in the present embodiment, as described above, "whether the difference between the maximum value ($P_{max}$) of the charging power and the value of current charging power ($P_1$) is equal to or higher than a certain value" is used as one of references for determining whether the charge curve is an exceptional curve. However, as is clear from the charge curve in Figure 3A, even during normal charging, continuance of charging for a certain period of time or more may cause "the difference between the maximum value ($P_{max}$) of the charging power and the value of current charging power ($P_1$)" to be "equal to or higher than a certain value". Therefore, to prevent a charge curve as shown in Figure 3A from being determined as an exceptional charge curve, what is the charging rate of the secondary battery is determined in step S6.

In this way, in the present embodiment, the determinations are performed using two references one of which relates to (i) the relation between the maximum value ($P_{max}$) of the charging power and the value of current charging power ($P_1$) and the other of which relates to (ii) the current state of charge. Accordingly, low-voltage charging as shown in Figure 3B can be appropriately detected at a time point at which such a long time has not elapsed for charging (in other words, a time at which the state of charge has not reached 50%, for example).

In the present invention, the references are not limited to the above two references. For example, an exceptional charge curve may be detected using three or more references including an additional reference.

In step S7, whether the power is being limited in accordance with an instruction from the outside is determined. Similarly to steps 4 to 6, step S7 may be performed by the charge controlling server 30. For example, when power used by a store, a house, or the like increases, it is expected that the charging power by the charger 15 in the power storing and charging system 1 is temporarily limited. In this case, even when the charging is performed so as to obtain a normal charge curve as shown in Figure 3A, low-power charging as shown in Figure 3B may be temporarily performed. To prevent this case from being determined as an exceptional charge curve, whether power is being limited in a current charging operation is determined in step S7.

As a result of determining steps S4 to S7, at least if it is determined that (a) the charging power dose not decrease monotonically for the certain period of time, (b) the difference between the maximum value of the charging power and the current value of the charging power is equal to or higher than the certain value, and (c) the current state of charge is equal to or less than the predetermined value, the charge controlling server 30 transmits an instruction to the charger 15 to stop temporarily and restart the charging operation (step S8). By this instruction, the charger 15 stops the current charging operation temporarily and restarts the charging operation. Alternatively, if it is determined that (d) the power is not being limited as a result of step S7 in addition to the above (a) to (c), the charging operation may be temporarily stopped and restarted.

Subsequently, steps S2 to S8 are repeated as needed. After the charging continues for a certain period of time or when a user performs an operation to end the charging, the charging of the electric vehicle is ended in accordance with a known method (step S9). According to the above series of operations, an electric vehicle can be charged with a charger.

According to the above rapid charging method in the present embodiment, whether a charge curve of charging power is an exceptional charge curve as shown in Figure 3B can be detected, and when it is detected that the charge curve is an exceptional curve, the current charging operation is stopped temporarily and restarted. An exceptional charge curve as shown in Figure 3B may be generated due to a program for controlling a charging operation, for example. According to the rapid charging method in the present embodiment, normal rapid charging can be continued in accordance with a normal charge curve as shown in Figure 3A by resetting charging operation.

As a result, even in a charging environment or an electric vehicle that is likely to generate such a charge curve, rapid charging can be performed preferably.

An example of the present invention has been described above. However, the present invention is not limited to the above descriptions and can be modified variously.

(a1) The rapid charging method or the like according to an embodiment of the present invention can be applied not only to the power storing and charging system 1 illustrated in Figure 1 but also to any system as long as a charger in the system performs rapid charging of a storage battery.

(a2) In the above descriptions, the charge management server determines whether a charging operation needs to be stopped and restarted and transmits a predetermined instruction to the charger. However, not the charging management server but the charger or a different computer device connected with the charger may perform the above determination. Even in this configuration, the rapid charging method according to the present invention can be performed preferably.

(a3) As an example, the charge management server 30 may be configured to transmit an instruction to the charger 15 to cause the monitor 16 to display the above temporal stop and restart of a charging operation when the temporal stop and restart are performed, and the monitor 16 may be configured to display the temporal stop and restart in response to this instruction.

(a4) The present invention can be applied not only to charging of an electric vehicle or the like but also to charging of other storage batteries. For example, the present invention can be used for a storage battery of an electric device, a storage battery for houses, a storage battery for backup such as a UPS, and a large-scale storage battery that stores power generated by solar power, wind power, or the like therein.

(Remarks)

The present specification discloses the following descriptions.

1. A rapid charging method for storage batteries using a charger, the method comprising the steps of:

A1: measuring charging power of a storage battery that is being charged;
A2: determining whether the measured charging power decreases monotonically for a certain period of time;
A3: determining whether a difference between a maximum value of the measured charging power and a value of current charging power is equal to or higher than a certain value;
A4: calculating a state of charge (SOC) of the storage battery and determining whether a current state of charge is equal to or less than a predetermined value; and
A5: stopping temporarily and restarting a charging, if (a) the charging power does not decrease monotonically for the certain period of time (more specifically, not decrease monotonically at a predetermined rate), (b) the difference between the maximum value of the charging power and the value of current charging power is equal to or higher than the certain value, and (c) the current state of charge is equal to or less than the predetermined value.

2. The rapid charging method for storage batteries according to the above 1, further comprising a step of A6: determining whether a power for concerned charger is being limited, wherein in the step of A5, the charging operation is stopped temporarily and restarted if (d) the power is not being limited in addition to the conditions (a) to (c).

3. The rapid charging method for storage batteries according to the above 1 or 2, wherein in the step of A3, whether a ratio of the current value of the charging power to the maximum value of the charging power is equal to or less than a certain ratio is determined.

4. A rapid charging system comprising: one or more rapid chargers that charge one or more storage batteries; and a charging-control device that controls at least a part of operations of the chargers, wherein the charging-control device includes:

B1: a power monitoring unit that gathers information relating to charging power of a storage battery that is being charged;
B2: a first determining unit that determines whether the charging power decreases monotonically for a certain period of time;
B3: a second determining unit that determines whether a difference between a maximum value of the charging power and a value of current charging power is equal to or higher than a certain value;
B4: a third determining unit that calculates a state of charge of the storage battery and determines whether a current state of charge is equal to or less than a predetermined value; and
B5: a charging restart instructing unit that transmits an instruction to the charger to stop temporarily and restart a charging operation if it is determined that (a) the charging power does not decrease monotonically for the certain period of time, (b) the difference between the maximum value of the charging power and the value of current charging power is equal to or higher than the certain value, and (c) the current state of charge is equal to or less than the predetermined value.

5. The rapid charging system according to the above 4, wherein
the charging-control device further includes
B6: a fourth determining unit that determines whether power for charger is being limited, and
the charging restart instructing unit causes the charger to stop temporarily and restart the charging operation if (d) the power is not being limited in addition to the conditions (a) to (c).

6. A computer program for a charging-control device in a rapid charging system that includes one or more rapid chargers that charge one or more storage batteries and the charging-control device that controls at least a part of operations of the chargers, wherein the computer program causes one or more computers to function as:

C1: a power monitoring unit that gathers information relating to charging power for a storage battery that is being charged;
C2: a first determining unit that determines whether the charging power decreases monotonically for a certain period of time;
C3: a second determining unit that determines whether a difference between a maximum value of the charging power and a value of current charging power is equal to or higher than a certain value;
C4: a third determining unit that calculates a state of charge of the storage battery and determines whether a current state of charge is equal to or less than a predetermined value; and
C5: a charging restart instructing unit that transmits an instruction to the charger to stop temporarily and restart a charging operation if it is determined that (a) the charging power does not decrease monotonically for the certain period of time, (b) the difference between the maximum value of the charging power and the current value of the charging power is equal to or higher than the certain value, and (c) the current state of charge is equal to or less than the predetermined value.

7. The computer program according to the above 6, wherein
the computer program causes the one or more computers to further function as
C6: a fourth determining unit that determines whether a power for the charger is being limited, and

the charging restart instructing unit that causes the charger to stop temporarily and restart the charging operation if (d) the power is not being limited in addition to the conditions (a) to (c).

A charging-control device according to an embodiment of the present invention is as follows.

A charging-control device includes:

means for gathering information indicating charging power of a storage battery during charging;
means for gathering information indicating a state of charge of the storage battery;
means for determining whether the charging power decreases monotonically for a certain period of time;
means for determining whether a difference between a maximum value of the charging power and a value of current charging power is equal to or higher than a certain value; and
means for determining whether the state of charge is equal to or less than a predetermined value, wherein
the charging-control device stops a charging operation if (a) the charging power does not decrease monotonically for the certain period of time, (b) the difference between the maximum value of the charging power and the current value of the charging power is equal to or higher than the certain value, and (c) the state of charge is equal to or less than the predetermined value.

REFERENCE SIGNS LIST

| 1 | POWER STORING AND CHARGING SYSTEM |
| 10 | CHARGING FACILITY |
| 15A TO 15B | CHARGER |
| 15A | CONTROL UNIT |
| 15B | FEEDING CABLE |
| 20 | PCS |
| 22 | SYSTEM POWER |
| 23 | STORAGE BATTERY |
| 24 | PHOTOVOLTAIC POWER GENERATING DEVICE |
| 30 | CHARGING-CONTROL SERVER |
| 35 | DISTRIBUTION NETWORK |
| 36 | NETWORK |

**Claims**

1. A rapid charging method for storage batteries using a charger, the method comprising the steps of:

   A1: measuring a charging power for a storage battery that is being charged;
   A2: determining whether the measured charging power decreases monotonically for a certain period of time;
   A3: determining whether a difference between a maximum value of the measured charging power and a value of current charging power is equal to or higher than a certain value;
   A4: calculating a state of charge (SOC) of the storage battery and determining whether a current state of charge is equal to or less than a predetermined value; and
   A5: stopping temporarily and restarting a charging, if (a) the charging power does not decrease monotonically for the certain period of time, (b) the difference between the maximum value of the charging power and the value of current charging power is equal to or higher than the certain value, and (c) the current state of charge is equal to or less than the predetermined value.

2. The rapid charging method for storage batteries according to Claim 1, further comprising a step of A6: determining whether a power for concerned charger is being limited, wherein in the step of A5, the charging operation is stopped temporarily and restarted if (d) the power is not being limited in addition to the conditions (a) to (c).

3. The rapid charging method for storage batteries according to Claim 1 or 2, wherein in the step of A3, whether a ratio of the current value of the charging power to the maximum value of the charging power is equal to or less than a certain ratio is determined.

4. A rapid charging system comprising: one or more rapid chargers that charge one or more storage batteries; and a charging-control device that controls at least a part of operations of the chargers, wherein the charging-control device includes:

   B1: a power monitoring unit that gathers information relating to charging power of a storage battery that is being charged;
   B2: a first determining unit that determines whether the charging power decreases monotonically for a certain period of time;
   B3: a second determining unit that determines whether a difference between a maximum value of the charging power and a value of current charging power is equal to or higher than a certain value;
   B4: a third determining unit that calculates a state of charge of the storage battery and determines whether a current state of charge is equal to or less than a predetermined value; and
   B5: a charging restart instructing unit that transmits an instruction to the charger to stop temporarily and restart a charging operation if it is determined that (a) the charging power does not decrease monotonically for the certain period of time, (b) the difference between the maximum value of the charging power and the current value of the charging power is equal to or higher than the certain value, and (c) the current state of charge is equal to or less than the predetermined value.

5. The rapid charging system according to Claim 4, wherein
the charging-control device further includes
B6: a fourth determining unit that determines whether power for charger is being limited, and
the charging restart instructing unit that causes the charger to stop temporarily and restart the charging operation if (d) the power is not being limited in addition to the conditions (a) to (c).

6. A computer program for a charging-control device in a rapid charging system that includes one or more rapid chargers that charge one or more storage batteries and the charging-control device that controls at least a part of operations of the chargers, wherein the computer program causes one or more computers to function as:

C1: a power monitoring unit that gathers information relating to charging power of a storage battery that is being charged;

C2: a first determining unit that determines whether the charging power decreases monotonically for a certain period of time;

C3: a second determining unit that determines whether a difference between a maximum value of the charging power and a value of current charging power is equal to or higher than a certain value;

C4: a third determining unit that calculates a state of charge of the storage battery and determines whether a current state of charge is equal to or less than a predetermined value; and

C5: a charging restart instructing unit that transmits an instruction to the charger to stop temporarily and restart a charging operation if it is determined that (a) the charging power does not decrease monotonically for the certain period of time, (b) the difference between the maximum value of the charging power and the current value of the charging power is equal to or higher than the certain value, and (c) the current state of charge is equal to or less than the predetermined value.

7. The computer program according to Claim 6, wherein

the computer program causes the one or more computers to further function as

C6: a fourth determining unit that determines whether a power for the charger is being limited, and

the charging restart instructing unit that causes the charger to stop temporarily and restart the charging operation if (d) the power is not being limited in addition to the conditions (a) to (c).

8. A charging-control device comprising:

means for gathering information indicating charging power of a storage battery during charging;

means for gathering information indicating a state of charge of the storage battery;

means for determining whether the charging power decreases monotonically for a certain period of time;

means for determining whether a difference between a maximum value of the charging power and a current value of the charging power is equal to or higher than a certain value; and

means for determining whether the state of charge is equal to or less than a predetermined value, wherein

the charging-control device stops a charging operation if (a) the charging power does not decrease monotonically for the certain period of time, (b) the difference between the maximum value of the charging power and the current value of the charging power is equal to or higher than the certain value, and (c) the state of charge is equal to or less than the predetermined value.

Fig.1

# Fig. 2

POWER NETWORK

# Fig.3A

Fig. 3B

Fig. 4

```
                    ┌──────────────────────┐
                    │        START         │─── S1
                    │   RAPID CHARGING     │
                    └──────────┬───────────┘
     ┌─────────────────────────┤
     │              ┌──────────▼───────────┐
     │              │       MEASURE        │─── S2
     │              │   CHARGING POWER     │
     │              └──────────┬───────────┘
     │                         │
     │              ┌──────────▼───────────┐
     │              │      CALCULATE       │─── S3
     │              │   STATE OF CHARGE    │
     │              └──────────┬───────────┘
     │       No     ┌──────────▼───────────┐
     │◄─────────────┤ MAXIMUM POWER VALUE-CURRENT │─── S4
     │              │ POWER VALUE>=CERTAIN VALUE? │
     │              └──────────┬───────────┘
     │                       Yes
     │       Yes    ┌──────────▼───────────┐
     │◄─────────────┤ DOES CHARGING POWER  │─── S5
     │              │ DECREASE MONOTONICALLY │
     │              │   FOR CERTAIN TIME?   │
     │              └──────────┬───────────┘
     │                        No
     │       No     ┌──────────▼───────────┐
     │◄─────────────┤ IS STATE OF CHARGE EQUAL TO OR │─── S6
     │              │ LESS THAN PREDETERMINED VALUE? │
     │              └──────────┬───────────┘
     │                       Yes
     │       Yes    ┌──────────▼───────────┐
     │◄─────────────┤ IS POWER BEING LIMITED? │─── S7
     │              └──────────┬───────────┘
     │                        No
     │              ┌──────────▼───────────┐
     │              │ STOP TEMPORARILY AND │─── S8
     └──────────────┤  RESTART CHARGING    │
                    └──────────┬───────────┘
                    ┌──────────▼───────────┐
                    │    END CHARGING      │─── S9
                    └──────────────────────┘
```

**EP 3 024 115 A1**

## INTERNATIONAL SEARCH REPORT

International application No.

PCT/JP2014/068805

### A. CLASSIFICATION OF SUBJECT MATTER
*H02J7/10*(2006.01)i

According to International Patent Classification (IPC) or to both national classification and IPC

### B. FIELDS SEARCHED

Minimum documentation searched (classification system followed by classification symbols)
H02J7/10

Documentation searched other than minimum documentation to the extent that such documents are included in the fields searched
Jitsuyo Shinan Koho        1922-1996   Jitsuyo Shinan Toroku Koho   1996-2014
Kokai Jitsuyo Shinan Koho  1971-2014   Toroku Jitsuyo Shinan Koho   1994-2014

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2010/067417 A1  (Toyota Motor Corp.), 17 June 2010 (17.06.2010), entire text; all drawings & US 2011/0101915 A1    & CN 102246386 A | 1-8 |
| A | WO 2010/089843 A1  (Toyota Motor Corp.), 12 August 2010 (12.08.2010), entire text; all drawings & US 2011/0309793 A1    & EP 2395622 A1 & CN 102301559 A | 1-8 |
| A | JP 2013-90496 A  (Toyota Motor Corp.), 13 May 2013 (13.05.2013), entire text; all drawings (Family: none) | 1-8 |

☐ Further documents are listed in the continuation of Box C.        ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 28 August, 2014 (28.08.14) | 09 September, 2014 (09.09.14) |

| Name and mailing address of the ISA/<br>    Japanese Patent Office | Authorized officer |
|---|---|
| Facsimile No. | Telephone No. |

Form PCT/ISA/210 (second sheet) (July 2009)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012118184 A